(19) Europäisches Patentamt
European Patent Office
Office européen des brevets

(11) **EP 4 465 199 A1**

(12) **EUROPEAN PATENT APPLICATION**

(43) Date of publication:
**20.11.2024 Bulletin 2024/47**

(21) Application number: **23305794.2**

(22) Date of filing: **17.05.2023**

(51) International Patent Classification (IPC):
**G06F 30/20** (2020.01)   **G06F 30/30** (2020.01)
**H03H 9/46** (2006.01)   **G06F 30/33** (2020.01)
**G06F 30/367** (2020.01)

(52) Cooperative Patent Classification (CPC):
**G06F 30/20; G06F 30/30; G06F 30/33;
G06F 30/36; G06F 30/367; H03H 9/46**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dassault Systèmes
78140 Vélizy-Villacoublay (FR)**

(72) Inventor: **WILD, Martin
8302 Kloten (CH)**

(74) Representative: **Atout PI Laplace
Immeuble Up On
25 Boulevard Romain Rolland
CS 40072
75685 Paris Cedex 14 (FR)**

(54) **COMPUTER IMPLEMENTED METHOD FOR OBTAINING AN ERROR FUNCTION FOR AN ELECTRICAL FILTER DESIGN**

(57)     A filter design method isolates parasitic zeros in a modelled response by comparison with a representation of a target response (610), and computes an adjusted representation of the target response (615) corresponding to an implementation of the adjusted target polynomial representation according to a desired filter type (chebychev, butterworth, etc.) and incorporating the parasitic zeros thus isolated (66). The parasitic zeros are then removed from this adjusted target polynomial representation (625), and also from the polynomial representation of the modelled response (620), and the two resulting representations used as the basis of an error function (630). This error function may then drive an iterative convergence minimising the error function (640), for example based on a stepwise convergence of parameters such as dimension values in a three dimensional model implementing each representation.

**FIG. 6**

**Description**

FIELD OF THE INVENTION

The invention pertains to the field of electrical filter design. In particular, the invention relates to a computer implemented method of obtaining an error function for an electrical filter design meeting an initial specification.

There are several concepts and techniques commonly used for filter optimization.

A first common approach is based on goal definition for filter response in the frequency domain.

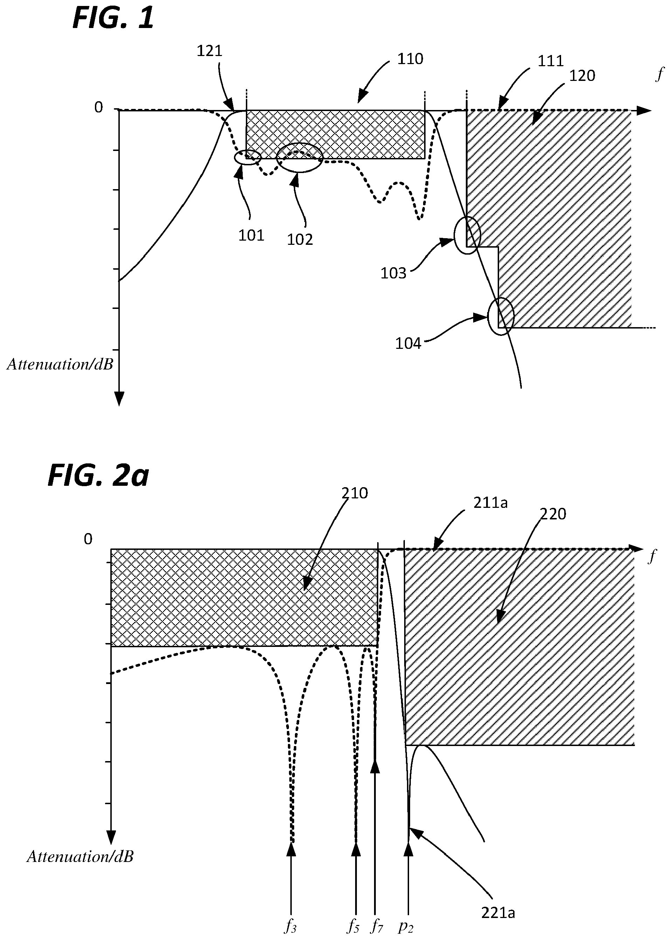

Figure 1 presents elements of a goal definition based approach.

In accordance with such methods, frequency samples from a simulated or measured filter response are compared to a goal definition.

Figure 1 presents axes plotting frequency against filter attenuation. A first curve 111 represents the measured or simulated input reflection coefficient S11 of a filter design. A second curve 121 represents the measured or simulated forward transmission coefficient S21 of the filter design. Goals may be defined in terms of maximum input reflection coefficient values for selected frequency ranges, as represented by the cross-hatched region 110. Goals may additionally or alternatively be defined in terms of maximum forward transmission coefficient values for selected frequency ranges, as represented by the hatched region 120.

For each frequency sample violating the goal the error is calculated and summed up to an overall error.

As shown, errors with respect to the maximum input reflection coefficient values occur in regions 101 and 102, and with respect to the maximum forward transmission coefficient values in regions 103 and 104. The overall error of a particular design may be determined as the area of the regions where an overlap between the respective simulated or measured filter response values and corresponding maxima.

This error is used by an optimization framework to optimize the filter response to fulfil a certain specification.

A second approach is based on optimizing an equivalent circuit to match the simulated or measured response. The target filter response equivalent circuit is optimized to match the simulated or measured filter response to get the extracted equivalent circuit. This extracted equivalent circuit is compared to the target equivalent circuit and used by the optimization framework.

Finally, it is known to perform filter parameter or coupling matrix extraction and to comparing to an ideal reference. From a simulated or measured filter response the filter polynomials are extracted as described for example in the article by M. Esmaeili and A. Borji entitled "Diagnosis and tuning of multiple coupled resonator filters," 2010 18th Iranian Conference on Electrical Engineering, Isfahan, 2010, pp. 124-129. May 2010. A filter implementation (typically a coupling matrix) is computed. This extracted filter implementation is compared to the target filter implementation computed from the target filter polynomials and used by the optimization framework.

This technique is state of the art for band-pass and band-stop filters, diplexers and multiplexers. It has been implemented in several solutions and is used for example in the *Simulia CST Studio Suite* as made available by the applicant for the present application.

When a filter is implemented, several parasitic effects appear in the implemented filter response. The techniques above can only partially deal with these effects and the optimized filter response often fails to converge to an acceptable response, converges slowly or even fails completely.

It is desired to provide a filter design method which provides improved handling of parasitic effects so as to converge more effectively on a desired response.

**SUMMARY OF THE INVENTION**

In accordance with the present invention in a first aspect there is provided a computer implemented method of obtaining an error function for an electrical filter design meeting an initial specification, the specification including: frequency response characteristics and a desired filter type polynomial representation of a target filter response meeting an initial specification, the target filter response comprising a reflection polynomial (F(s)) and a transmission polynomial (P(s)), and a frequency response of a preliminary implementation model for optimization to meet the target filter response.

The method comprises the steps of extracting a refined polynomial representation from the frequency response of the preliminary implementation model, the reflection polynomial (F(s)) and/or the transmission polynomial (P(s)) of the refined polynomial representation having a higher order than the respective order of a reflection polynomial (F(s)) and a transmission polynomial (P(s)) of the polynomial representation of a target filter response, comparing the polynomial representation of a target filter response with the refined polynomial representation to isolate polynomial parasitic zeros in the refined polynomial representation, computing an adjusted polynomial representation of a target filter response corresponding to an implementation of the adjusted polynomial representation according to the desired filter type and incorporating the polynomial parasitic zeros, removing the parasitic zeros from the adjusted polynomial representation of a target response to obtain a compensated polynomial representation of the target response, removing the parasitic zeros from the refined polynomial representation of a modelled response to obtain a compensated polynomial representation of the modelled response, and determining an error function between the compensated polynomial representation of the target response and the compensated polynomial representation of the modelled response.

This approach accelerates convergence, and ensures convergence with high parasitic effects to any required filter type including an ideal equiripple filter response.

In a development of the first aspect, the method comprises the further step of optimizing the modelled implementation to minimize the error function between the compensated polynomial representation of the target response and the compensated polynomial representation of the modelled response.

In a development of the first aspect, the step of optimizing comprises iteratively adjusting the preliminary implementation model to minimize the error between the compensated polynomial representation of the target response and the compensated polynomial representation of the modelled response.

In a development of the first aspect, the step of optimizing comprises the further steps of synthesizing compensated target parameters of a modelled implementation according to a specified model structure of the compensated polynomial representation of the target response, synthesizing compensated modelled parameters of a modelled implementation according to a specified model structure of the compensated polynomial representation of the modelled response, the error function being determined by comparing the compensated target parameters and the compensated modelled parameters, and iteratively adjusting the compensated target parameters of the modelled implementation to minimize the error function between the compensated target parameters and the compensated modelled parameters.

In a development of the first aspect, the step of extracting a polynomial representation of the modelled filter is performed by means of a polynomial fitting algorithm.

In a development of the first aspect, the desired filter type specifies any one of a Butterworth, Bessel, Chebyshev I, Chebyshev II, Elliptic or equiripple filter type.

In a development of the first aspect, the desired filter type comprises a custom filter type.

In a development of the first aspect, the frequency response characteristics define one of a lowpass filter, a highpass filter, a bandpass filter, a bandstop filter, a diplexer or a multiplexer, an antenna or a filtenna, and corresponding frequency thresholds and gain characteristics.

In a development of the first aspect, the frequency response characteristics are defined in terms of at least a set of input reflection and/or transmission.

In a development of the first aspect, the modelled implementation according to a specified model structure of the compensated modelled response, and the modelled implementation of the compensated modelled response comprise a three dimensional model of the physical disposition of a plurality of conductive elements, wherein the parameters define the physical disposition.

In a development of the first aspect, the step of defining parameters of a modelled implementation according to a specified model structure of the compensated target response, and the step of defining parameters of a modelled implementation according to a specified model structure of the compensated modelled response comprise developing a Coupling Matrix representation of the parameters.

In a development of the first aspect, the step of defining parameters of a modelled implementation according to a specified model structure of the compensated target response, and the step of defining parameters of a modelled implementation according to a specified model structure of the compensated modelled response comprise developing a Lumped Element Circuit representation of the parameters.

In a development of the first aspect, the Lumped Element Circuit comprises a Ladder Circuit representation of the parameters.

In accordance with the invention in a second aspect there is provided a computer program comprising instructions which, when the program is executed by a computer, cause the computer to carry out the method of the first aspect.

In accordance with the invention in a third aspect there is provided a computer-readable medium comprising instructions which, when the program is executed by a computer, cause the computer to carry out the method of the first aspect.

In accordance with the invention in a fourth aspect there is provided a data processing system comprising means for carrying out the method of the first aspect.

## BRIEF DESCRIPTION OF THE DRAWINGS

The invention will be better understood and its various features and advantages will emerge from the following description of a number of exemplary embodiments provided for illustration purposes only and its appended figures in which:

Figure 1 presents elements of a goal definition based approach;
Figure 2a provides a representation of aspects of an initial specification in accordance with an embodiment;

Figure 2b provides a representation of a simulated or measured response as may belong to the specification;

Figure 2c provides a representation of an adjusted polynomial representation of a target filter response as may be computed incorporating the polynomial parasitic zeros;

Figure 2d provides a representation of compensated polynomial representation of the target response as may be obtained excluding the polynomial parasitic zeros;

Figure 2e provides a representation of compensated polynomial representation of the modelled response as may be obtained excluding the polynomial parasitic zeros;

Figure 3 present an example of a model structure with respect to which parameters may be synthesized and compared;

Figure 4a shows a final optimized response as may be obtained with a compensated polynomial representation of the target response;

Figure 4b shows an optimized response as may be obtained with an ideal reference filter implementation;

Figure 5 summarises the steps of a computer implemented method of obtaining an error function for an electrical filter design meeting an initial specification;

Figure 6 provides a summary of the different representations processed at different stages of methods according to embodiments;

Figure 7a presents a circuit model used as the basis for a worked example;

Figure 7b presents an equivalent 3D Model for the circuit of figure 7a; and

Figure 8 presents a computer suitable for carrying out a method according to an embodiment.

**Detailed description**

With significant parasitic effects, optimization is not converging to an ideal filter response, converges slowly or even fails completely.

Embodiments as described herein use the information of the extracted parasitic zeros to synthesize a distorted reference filter implementation, which is used for optimization. A Parasitic zero is a zero which is typically out of the frequency band of interest. A Parasitic zero changes the response in an undesired way.

With a distorted reference filter implementation the optimization typically converges much quicker and the optimized response perfectly matches the specified filter requirements.

In particular, there is provided a computer implemented method of obtaining an error function for an electrical filter design meeting an initial specification including frequency response characteristics and a desired filter type.

Figure 2a provides a representation of aspects of an initial specification in accordance with an embodiment.

In particular, the initial specification includes frequency response characteristics, as represented in figure 2a.

As shown, similarly to the representation of figure 1, an initial specification is defined terms of maximum input reflection coefficient values for selected frequency ranges, as represented by the cross-hatched region 210 and/or in terms of maximum forward transmission coefficient values for selected frequency ranges, as represented by the hatched region 220.

A polynomial representation of a target filter response meeting this initial specification is provided comprising a reflection polynomial (F(s)) and a transmission polynomial (P(s)).

The skilled person will appreciate that methods for the generation of such a polynomial representation of a target filter response are known in the art. In certain embodiments, such steps may be additionally performed as preliminary operation.

A set of polynomials describing a filter response may typically take the form set out below:

$$F(s) = \sum_{k=0}^{N} a_k \cdot s^k = \prod_{k=0}^{N-1} (s - f_k)$$

$$P(s) = \sum_{k=0}^{N_{TZ}} b_k \cdot s^k = \prod_{k=0}^{N_{TZ}-1} (s - p_k)$$

$$E(s) \cdot E(s)^* = F(s) \cdot F(s)^* + P(s) \cdot P(s)^*$$

$$S_{11}(s) = \frac{F(s)}{E(s)}$$

$$S_{21}(s) = \frac{P(s)}{E(s)}$$

E(s) polynomial describes the poles of the filter and can be derived from F(s) and P(s) by solving the Feldtkeller equation assuming conservation of energy.

On this basis, a model equation system for polynomial fitting is set out below.

$$\frac{S_{11}(s)}{S_{21}(s)} = \frac{F(s)}{P(s)}$$

$$S_{21}(s_i) \cdot F(s_i) - S_{11}(s_i) \cdot P(s_i) = 0 \qquad i = 0, 1, 2, \ldots$$

$$S_{21}(s_i) \cdot \sum_{k=0}^{N} a_k \cdot s_i^k - S_{11}(s_i) \cdot \sum_{k=0}^{N_{TZ}} b_k \cdot s_i^k = 0$$

Where:

N, NTZ are the orders of the polynomials
ak and bk are polynomials coefficients.

Such a system may then be solved in a least-square sense to obtain fitted polynomials for of the specified target values.

The Polynomial representation of the target filter response thus obtained is illustrated by way of example in figure 2a by curve 211a, representing target filter response input reflection coefficient S11 of a filter design and curve 221a representing target filter response forward transmission coefficient S21. The target filter response will exhibit zeros at certain frequencies.

Specifically, for the sake of the present example based on a 1000.0 Hz lowpass filter, zeros may be present as follows:

f1 = 0.0 Hz
f2 = -472.8 Hz, f3 = 472.8 Hz
f4 = -817.1 Hz, f5 = 817.1 Hz
f6 = -980.7 Hz, f7 = 980.7 Hz
p1 = -1330.0 Hz, p2 = 1330.0 Hz

For the presented lowpass filter the zeros typically are normalized to the filter prototype

$$f'n = fn / f0$$

where f0 is the lowpass filter transition frequency.
f'1 = 0.0
f'2 = -0.4728j, f'3 = 0.4728j
f'4 = -0.8171j, f'5 = 0.8171j
f'6 = -0.9807j, f'7 = 0.9807j
p'1 = -1.33j, p'2 = 1.33j

These values are presented in the context of a filter prototype having a transition frequency at 1 Hz. By convention these values are presented in the complex domain with a real and/or imaginary component (as denoted by the j suffix).

As such, the frequency response characteristics of the specification may be defined in terms of at least a set of input reflection and/or forward transmission thresholds at defined frequencies.

Such characteristics may define one of a lowpass filter, a highpass filter, a bandpass filter, a bandstop filter, a diplexer or a multiplexer, an antenna or a filtenna, and corresponding frequency thresholds and attenuation characteristics.

The desired filter type specifies any one of a Butterworth, Bessel, Chebyshev I, Chebyshev II, Elliptic or equiripple filter type, or any custom filter type as may be required. In the present example, a equiripple type filter with only one transmission zero pair is specified.

The Target response may comprise a reflection polynomial (F(s)) and a transmission polynomial (P(s)).

Filter polynomials are typically named $F(s)$ containing the reflection zeros $f_k$ and $P(s)$ containing the transmission zeros $p_k$ of the filter where $s = j \cdot \omega = j \cdot 2 \cdot \pi \cdot f$.

For a diplexer and multiplexer the polynomials are typically named $N(s)$ containing the reflection zeros and for each channel a $P_N(s)$ containing the transmission zeros of the channel filter.

Meanwhile, a frequency response of a preliminary implementation model for optimization to meet the target filter response is provided.

For example, an implementation model may comprise a three dimensional model of the physical disposition of a plurality of conductive elements, a Coupling Matrix, a Lumped Element Circuit representation and the like, with parameters being determined as required according to known methods. The model type and preliminary parameters of the selected type may be chosen on the basis of user selection or automatically in accordance with general design considerations as known to the skilled person, and the resulting frequency response obtained according to known simulation techniques. The frequency response of a preliminary implementation may be provided as a prerequisite of methods in accordance with embodiments, or may be obtained as preliminary steps of certain such embodiment.

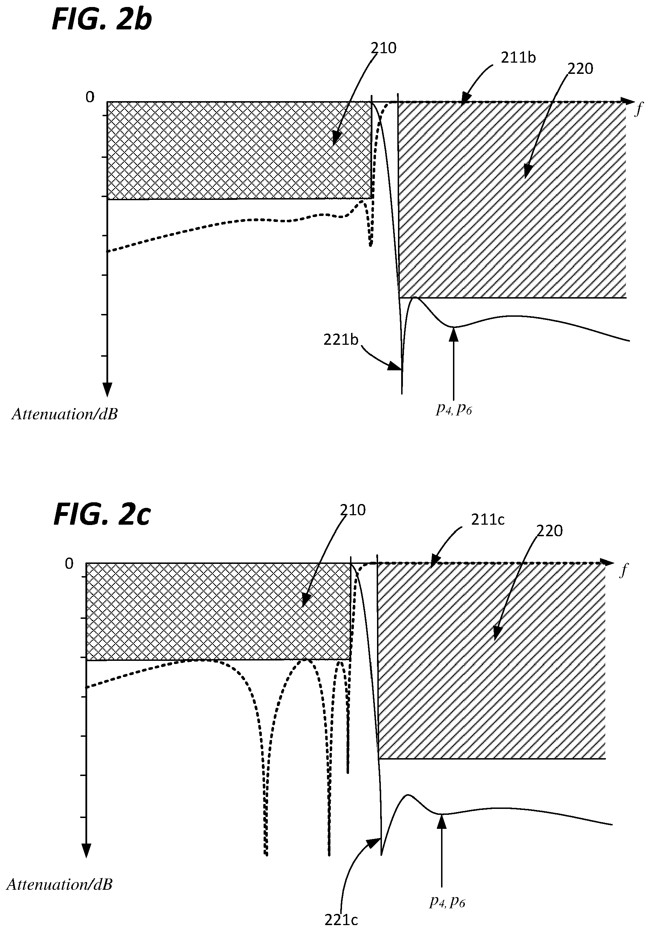

Figure 2b provides a representation of a simulated or measured response as may belong to the specification.

Similarly to the representation of figure 1, a first curve 211b represents the measured or simulated input reflection coefficient S11 of the preliminary implementation model. A second curve 221b represents the measured or simulated forward transmission coefficient S21 of the preliminary implementation model. The maximum input reflection coefficient values for selected frequency ranges, as represented by the cross-hatched region 210 and maximum forward transmission coefficient values for selected frequency ranges, as represented by the hatched region 220, are retained unchanged for reference. On the basis of these prerequisites, the method proceeds with the following steps.

A refined polynomial representation is extracted from the frequency response of the preliminary implementation model as represented for example in figure 2b. The reflection polynomial (F(s)) and/or the transmission polynomial (P(s)) of the refined polynomial representation are defined as having a higher order than the respective order of a reflection polynomial (F(s)) and a transmission polynomial (P(s)) of the polynomial representation of the target filter response. This may be performed using the polynomial fitting method described above for example.

The polynomial representation of a target filter response is compared with the refined polynomial representation to isolate polynomial parasitic zeros in the refined polynomial representation.

Specifically, in the present example, the following zeros are identifiable:

f1 = 0.0 Hz + 50.0
f2 = -500.0 Hz + 200, f3 = 500.0 Hz + 200.0
f4 = -800.0 Hz + 100.0, f5 = 800.0 Hz + 100.0
f6 = -980.0 Hz + 10.0, f7 = 980.0 Hz + 10.0
p1 = -1300.0 Hz, p2 = 1300.0 Hz
parasitic transmission zeros
p3 = -1700.0 Hz + 500.0, p4 = 1700.0 Hz + 500.0
p5 = -1700.0 Hz - 500.0, p6 = 1700.0 Hz - 500.0

In the preceding notation in the form (aHz +b), the b part represents the denormalized real part of each value, and the a part represents the denormalized imaginary part.

By convention, these values may be normalized by dividing by the transition frequency of the filter, which for the present example is set at 1000 Hz, giving:

f'1 = 0.05
f'2 = -0.5j + 0.2, f'3 = 0.5j + 0.2
f'4 = -0.8j + 0.1, f'5 = 0.8j + 0.1
f'6 = -0.98j + 0.01, f'7 = 0.98j + 0.01
p'1 = -1.3j, p'2 = 1.3j
parasitic transmission zeros
p'3 = -1.7j + 0.5, p'4 = 1.7j+ 0.5
p'5 = -1.7j - 0.5, p'6 = 1.7j - 0.5

It may be noted that a Parasitic Zero does not necessarily cross the below line because it might be a complex zero, as is here the case for p4 and p6 for example.

On this basis, an adjusted polynomial representation of a target filter response corresponding to an implementation of the adjusted polynomial representation according to the desired filter type and incorporating the polynomial parasitic zeros is computed.

As mentioned above, the desired filter type may be any one of a Butterworth, Bessel, Chebyshev I, Chebyshev II, Elliptic or equiripple filter type, or any custom filter type as may be required. In the present example, a equiripple filter is specified as discussed above.

While for the Butterworth and Chebyshev II filtering characteristics the reflection zeros are all zero, for other filtering characteristics the reflection zero positions may have to be adjusted to maintain a desired filtering characteristic response.

Figure 2c provides a representation of an adjusted polynomial representation of a target filter response as may be computed incorporating the polynomial parasitic zeros.

Similarly to the representation of figure 1, a first curve 211c represents the input reflection coefficient S11 of the adjusted polynomial representation of a target filter response. A second curve 221c represents the measured or simulated forward transmission coefficient S21 of the adjusted polynomial representation of a target filter response. The maximum input reflection coefficient values for selected frequency ranges, as represented by the cross-hatched region 210 and maximum forward transmission coefficient values for selected frequency ranges, as represented by the hatched region 220, are retained unchanged for reference.

Specifically, in the present example, the following zeros are identifiable:

f1 = 0.0 Hz
f2 = -505.6 Hz, f3 = 505.6Hz
f4 = -837.6 Hz, f5 = 837.6 Hz
f6 = -983.1 Hz, f7 = 983.1 Hz
p1 = -1330.0 Hz, p2 = 1330.0 Hz
parasitic transmission zeros
p3 = -1700.0 Hz + 500.0, p4 = 1700.0 Hz + 500.0
p5 = -1700.0 Hz - 500.0, p6 = 1700.0 Hz - 500.0

Here again, these values may be normalized by dividing by the transition frequency of the filter, which for the present example is set at 1000 Hz to obtain:

f'1 = 0.0
f'2 = -0.5056j, f'3 = 0.5056j
f'4 = -0.8376j, f'5 = 0.8376j
f'6 = -0.9831j, f'7 = 0.9831j
p'1 = -1.33j, p'2 = 1.33j
parasitic transmission zeros
p'3 = -1.7j + 0.5, p'4 = 1.7j + 0.5
p'5 = -1.7j - 0.5, p'6 = 1.7j - 0.5

The identified parasitic zeros are next removed from the adjusted polynomial representation of the target response to obtain a compensated polynomial representation of the target response, leaving in the present example the zeros set out below:

f1 = 0.0 Hz
f2 = -505.6 Hz, f3 = 505.6 Hz
f4 = -837.6 Hz, f5 = 837.6 Hz
f6 = -983.1 Hz, f7 = 983.1 Hz
p1 = -1330.0 Hz, p2 = 1330.0 Hz

Here again, these values may be normalized by dividing by the transition frequency of the filter, which for the present example is set at 1000 Hz to obtain:

f'1 = 0.0
f'2 = -0.5056j, f'3 = 0.5056j
f'4 = -0.8376j, f'5 = 0.8376j
f'6 = -0.9831j, f'7 = 0.9831j
p'1 = -1.33j, p'2 = 1.33j

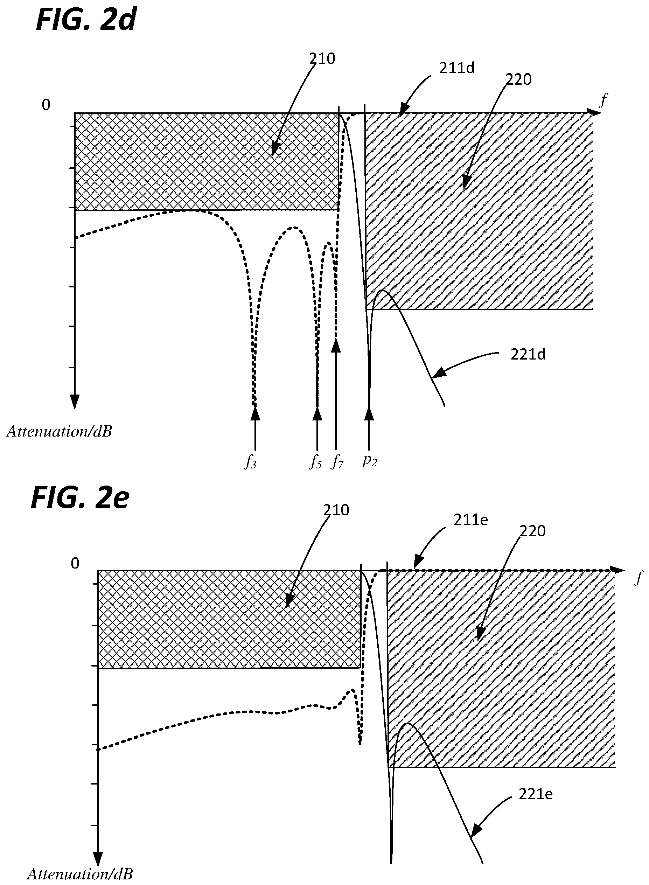

Figure 2d provides a representation of compensated polynomial representation of the target response as may be obtained excluding the polynomial parasitic zeros.

Similarly to the representation of figure 1, a first curve 211d represents the input reflection coefficient S11 of a compensated polynomial representation of the target response. A second curve 221d represents forward transmission coefficient S21 of a compensated polynomial representation of the target response. The maximum input reflection coefficient values for selected frequency ranges, as represented by the cross-hatched region 210 and maximum forward transmission coefficient values for selected frequency ranges, as represented by the hatched region 220, are retained unchanged for reference.

Specifically, in the present example, the following zeros are identifiable:

f1 = 0.0 Hz
f2 = -505.6 Hz, f3 = 505.6 Hz
f4 = -837.6 Hz, f5 = 837.6 Hz
f6 = -983.1 Hz, f7 = 983.1 Hz
p1 = -1330.0 Hz, p2 = 1330.0 Hz

Here again, these values may be normalized by dividing by the transition frequency of the filter, which for the present example is set at 1000 Hz to obtain:

f'1 = 0.0
f'2 = -0.5056j, f'3 = 0.5056j
f'4 = -0.8376j, f'5 = 0.8376j
f'6 = -0.9831j, f'7 = 0.9831j
p'1 = -1.33j, p'2 = 1.33j

Meanwhile, the parasitic zeros may similarly be removed from the refined polynomial representation of a modelled response to obtain a compensated polynomial representation of the modelled response.

Figure 2e provides a representation of compensated polynomial representation of the modelled response as may be obtained excluding the polynomial parasitic zeros.

Similarly to the representation of figure 1, a first curve 211e represents the input reflection coefficient S11 of a compensated polynomial representation of the modelled response. A second curve 221e represents the measured or simulated forward transmission coefficient S21 of a compensated polynomial representation of the modelled response. The maximum input reflection coefficient values for selected frequency ranges, as represented by the cross-hatched region 210 and maximum forward transmission coefficient values for selected frequency ranges, as represented by the hatched region 220, are retained unchanged for reference.

Specifically, in the present example, the following zeros are identifiable:

f1 = 0.0 Hz + 50.0
f2 = -500.0 Hz + 200.0, f3 = 500.0 Hz + 200.0
f4 = -800.0 Hz + 100.0, f5 = 800.0 Hz + 100.0
f6 = -980.0 Hz + 10.0, f7 = 980.0 Hz + 10.0
p1 = -1300.0 Hz, p2 = 1300.0 Hz

Here again, these values may be normalized by dividing by the transition frequency of the filter, which for the present example is set at 1000 Hz to obtain:

f'1 = 0.05
f'2 = -0.5j + 0.2, f'3 = 0.5j + 0.2
f'4 = -0.8j + 0.1, f'5 = 0.8j + 0.1
f'6 = -0.98j + 0.01, f'7 = 0.98j + 0.01
p'1 = -1.3j, p'2 = 1.3j

Finally, an error function between the compensated polynomial representation of the target response and the compensated polynomial representation of the modelled response may be determined.

This error function may constitute a useful datum in itself, as an indication of the quality of a particular design solution, and may additionally provide the basis for further refinement of a design as discussed below. This error function might be based on the comparison of polynomial coefficients or polynomial zeros.

In accordance with certain embodiments, a further step of optimizing the modelled implementation to minimize the error function between the compensated polynomial representation of the target response and the compensated polynomial representation of the modelled response may be performed.

This step of optimizing may comprise iteratively adjusting the preliminary implementation model to minimize the error between the compensated polynomial representation of the target response and the compensated polynomial representation of the modelled response.

This step of optimizing may comprise synthesizing compensated target parameters of a modelled implementation according to a specified model structure of the compensated polynomial representation of the target response, and synthesizing compensated modelled parameters of a modelled implementation according to a specified model structure of the compensated polynomial representation of the modelled response. While synthesizing compensated modelled parameters of a modelled implementation according to a specified model structure of the compensated polynomial representation of the modelled response may comprise realising a 3D model or other physical model of the electrical characteristics of a physical structure, synthesizing compensated target parameters of a modelled implementation according to a specified model structure of the compensated polynomial representation of the target response may be limited to a conversion to equivalent polynomial representation such as a coupling matrix or lumped element circuit. The 3D model may represent electrical components.

The error function may then be determined by comparing the compensated target parameters and the compensated modelled parameters, and iteratively adjusting the modelled implementation to minimize the error function between the compensated target parameters and the compensated modelled parameters.

For example, defining parameters of a modelled implementation according to a specified model structure of the compensated target response, and/or defining parameters of a modelled implementation according to a specified model structure of the compensated modelled response may comprise developing a Lumped Element Circuit representation of the parameters, such as a Ladder Circuit representation of the parameters.

Where parameters comprise the modelled and synthesized electrical values of the filter circuit elements (e.g. capacitance, resistance and inductance values), the values of the modelled circuit may be directly modified to correspond to the synthesised values. This approach may be applicable for example where an existing circuit needs to be modified to compensate for parasitic components not incorporated in the original design.

The described method may be used to design and optimize any type of electrical filter in any frequency range and applies to lowpass, highpass, bandpass, bandstop, diplexers and multiplexers, filters, antennas and filtennas. Independent of the desired filter response (Butterworth, Chebyshev I, Chebyshev II, Elliptic, equiripple, etc.) or the physical implementation (lumped element, distributed transmission line, coaxial cavity, waveguide, active operational amplifier, digital, switched capacitor, etc.) the concept can be used to improve design accuracy and drastically accelerate the design process. Filters are most often used in telecom, satcom and radar system industries.

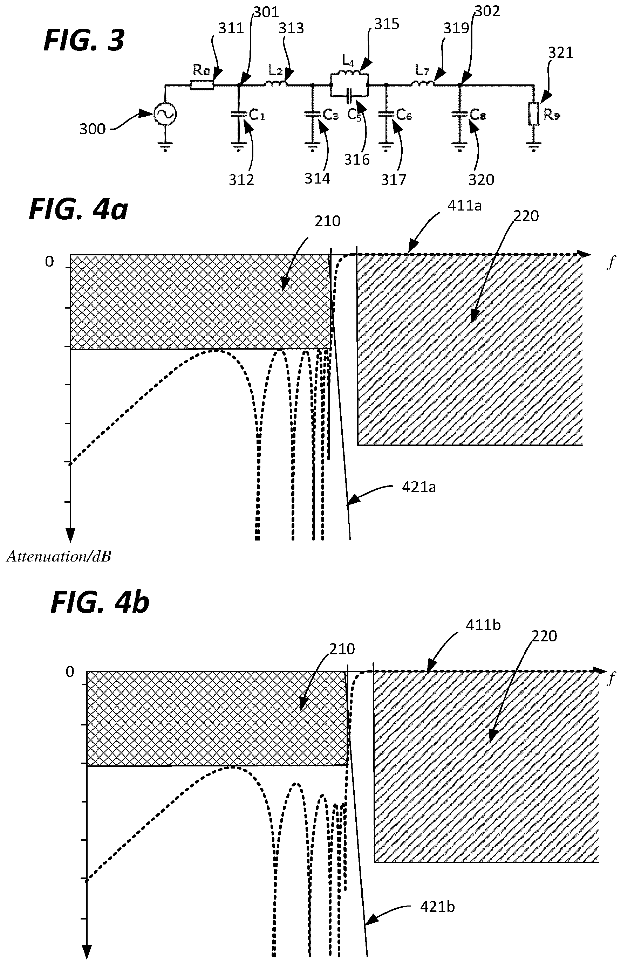

Figure 3 present an example of a model structure with respect to which parameters may be synthesized and compared as discussed above.

Specifically, figure 3 shows a ladder network filter topology comprising a signal source 300 coupled between a ground terminal and the first terminal of a source resistor R0 311. The second terminal of the source resistor R0 311 is the filter input terminal 301. The input terminal 301 is coupled to a first terminal of an Inductor L2 313, and to ground via a capacitor C1 312. The second terminal of Inductor L2 313 is coupled to ground via a capacitor C3 314, and to the first inputs of an inductor L4 315 and a capacitor C5 316 arranged in parallel. The second terminals of inductor L4 315 and capacitor C5 316 are coupled to ground via a capacitor C6 317, and to the first terminal of an inductor L7 319. The second terminal of the inductor L7 319 is coupled to ground via a capacitor C8 320 and is the filter output terminal 302. The filter output terminal 302 is coupled to ground via load resistor R9 321.

It will be appreciated that the modelled implementation may be modelled as a physical structure of conductive elements approximating the desired electrical structure. That is to say, the modelled implementation according to a specified model structure of the compensated modelled response, may comprise a three dimensional model of the physical disposition of a plurality of conductive elements, wherein the parameters define the physical disposition. The complex interaction of electrical parameters in such a context makes it impossible to simply specify the required values, but rather the structure must be iteratively adjusted at a physical level, e.g. by adjusting physical parameter such as physical dimensions, spacing, materials, etc., to improve the alignment between the predicted or simulated electrical properties of the model as discussed herein. The skilled person will recognize that various rules of thumb enabling a determination of how physical parameters should be adjusted to achieve a desired evolution in electrical characteristics in accordance with embodiments. While such rules of thumb may make it possible to automatically select the physical parameters to be modified, and the direction in which they should be modified to converge on the desired electrical characteristics, the degree to which they should be modified cannot be directly determined, and so may be determined iteratively as described herein.

The value of each of these components is calculated for compensated polynomial representation the target response, and for the compensated polynomial representation of the modelled response.

By way of example, the following sets of values might be obtained on the basis of the foregoing example:

|  | Target | Extracted | Deviation |
|---|---|---|---|
| $R_0$ | 50.0 Ω | 50.0 Ω | +0.0 % |
| $C_1$ | 3.0312 μF | 1.8897 μF | -37.7 % |
| $L_2$ | 11.244 mH | 10.265 mH | -8.7 % |
| $C_3$ | 4.7465 μF | 3.8393 μF | -19.1 % |
| $L_4$ | 7.1798 mH | 6.6208 mH | -7.8 % |
| $C_5$ | 1.9945 μF | 2.2638 μF | +13.5 % |
| $C_6$ | 4.7465 μF | 4.3467 μF | -8.4 % |
| $L_7$ | 11.244 mH | 11.813 mH | +5.1 % |
| $C_8$ | 3.0312 μF | 3.0437 μF | +0.41 % |
| $R_9$ | 50.0Ω | 51.456 Ω | +2.19 % |

As discussed, an iterative process may now ensue whereby the values of each of the parameters, which may comprise for example the dimensions and spacing of physical elements of a conductive structure, for the implementation of compensated polynomial representation of the modelled response are adjusted to progressively approach those of the compensated polynomial representation the target response, until the error function may then be determined by comparing the compensated target parameters and the compensated modelled parameters, and iteratively adjusting the compensated target parameters of the modelled implementation to minimize the error function between the compensated target parameters and the compensated modelled parameters until a desired error threshold is reached.

In other embodiments, defining parameters of a modelled implementation according to a specified model structure of the compensated modelled response may comprise developing a Coupling Matrix representation of the parameters.

Typically the parameters in the modelled implementation can be linked to a parameter in the coupling matrix. But the parameter of the modelled implementation influences all parameters of the extracted coupling matrix (of course most of them only little).

Figure 4a shows a final optimized response as may be obtained with a compensated polynomial representation of the target response as described above.

Similarly to the representation of figure 1, a first curve 411a represents the input reflection coefficient S11 of an optimized response obtained with a compensated polynomial representation of the target response as described above. A second curve 421a represents the measured or simulated forward transmission coefficient S21 of an optimized response obtained with a compensated polynomial representation of the target response as described above. The maximum input reflection coefficient values for selected frequency ranges, as represented by the cross-hatched region 210 and maximum forward transmission coefficient values for selected frequency ranges, as represented by the hatched region 220, are retained unchanged for reference.

Figure 4b shows an optimized response as may be obtained with an ideal reference filter implementation.

This represents result that may be obtained without recourse to the approach of the invention, providing a basis of comparison.

Similarly to the representation of figure 1, a first curve 411b represents the input reflection coefficient S11 of an optimized response obtained with an ideal polynomial representation of the target response as described above. A second curve 421b represents the measured or simulated forward transmission coefficient S21 of an optimized response obtained with an ideal polynomial representation of the target response as described above. The maximum input reflection coefficient values for selected frequency ranges, as represented by the cross-hatched region 210 and maximum forward transmission coefficient values for selected frequency ranges, as represented by the hatched region 220, are retained unchanged for reference.

It may be noted that the deviation from the specification is inacceptable when the filter is optimized with an ideal reference filter implementation as shown in figure 4b, demonstrating the importance of the operations of removing parasitic zeros as described above.

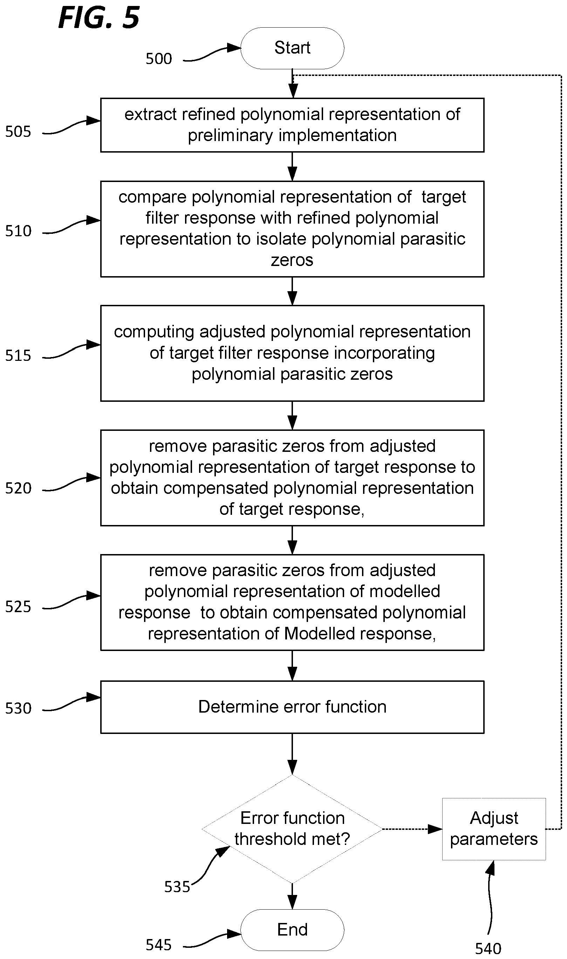

Figure 5 summarises the steps of a computer implemented method of obtaining an error function for an electrical filter design meeting an initial specification.

As shown, the method begins at step 500 before proceeding to step 505 at which a refined polynomial representation is extracted from the frequency response of a preliminary implementation model, the reflection polynomial (F(s)) and/or transmission polynomial (P(s)) of the refined polynomial representation having a higher order than the respective order of a reflection polynomial (F(s)) and a transmission polynomial (P(s)) of the polynomial representation of a target filter response.

The method then proceeds to step 510 at which the polynomial representation of a target filter response is compared with the refined polynomial representation to isolate polynomial parasitic zeros in the refined polynomial representation.

The method then proceeds to step 515 at which an adjusted polynomial representation of a target filter response corresponding to an implementation of the adjusted polynomial representation according to a desired filter type and incorporating the polynomial parasitic zeros is computed.

The method then proceeds to step 520 at which the parasitic zeros are removed from the adjusted polynomial representation of a target response to obtain a compensated polynomial representation of the target response.

The method then proceeds to step 525 at which the parasitic zeros are removed from the refined polynomial representation of a modelled response to obtain a compensated polynomial representation of the modelled response.

The method then proceeds to step 530 at which an error function between the compensated polynomial representation of the target response and the compensated polynomial representation of the modelled response is determined.

As shown, it is optionally determined at step 535 whether an error threshold is met, an in a case where the threshold is not met, the method may proceed to adjust model parameters as described above at step 540 before looping back step 505.

Once it is determined as the case may be at step 535 that the threshold is met, or otherwise, the method may terminate at step 545.

It will be appreciated that certain steps of figure 5 need not be performed in the order mentioned. For example, steps 520 and 525 may be inverted, or performed in parallel.

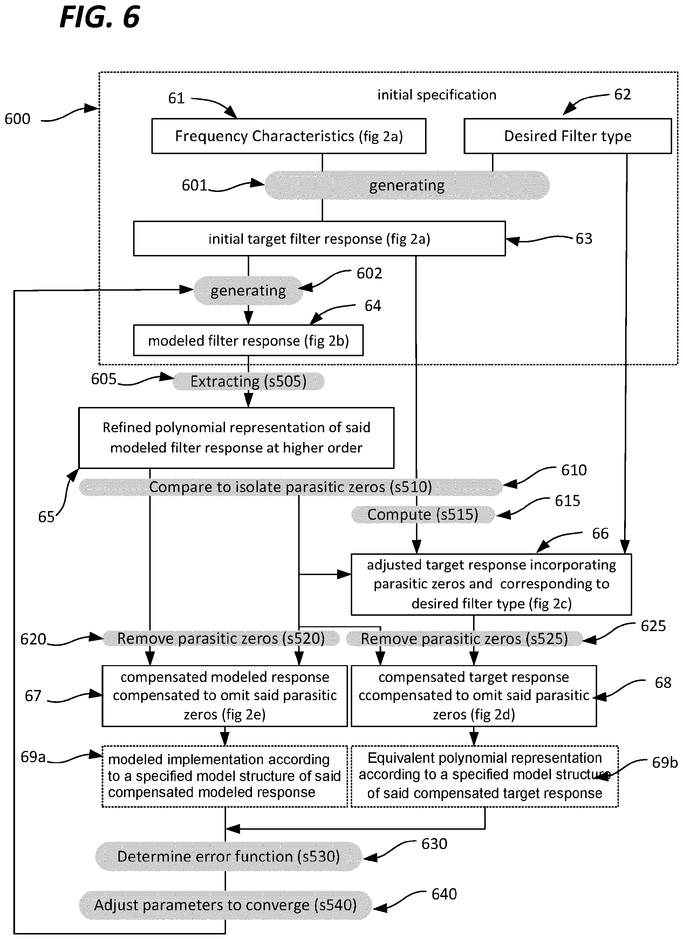

Figure 6 provides a summary of the different representations processed at different stages of methods according to embodiments.

As shown, the initial specification 600 comprises Frequency Characteristics 61 as described with for example to figure 2a, and a filter type 62. Optional preliminary step 601 generates an initial target filter response 63 also described with reference to figure 2a on the basis of Frequency Characteristics 61 and filter type 62. Optional preliminary step 602 generates the modelled filter response 64 from initial target filter response 63 as described with reference to figure 2b. At step 605, corresponding to step 505 of figure 5, refined polynomial representation of the modelled filter response at higher order 65 is extracted from initial target filter response 63. This is compared with the initial target filter response 63 to isolate parasitic zeros at step 610, corresponding to step 510 of figure 5. The isolated parasitic zeros thus obtained are removed from the initial target filter response 62 at step 615 corresponding to step 515 of figure 5, to obtain an adjusted target response 66 incorporating parasitic zeros and corresponding to the desired filter type 62 as described for example with reference to figure 2c. The isolated parasitic zeros obtained are then removed from the refined polynomial representation 65 to obtain a compensated modelled response 67 as described with reference to figure 2e at step 620, corresponding to step 520 of figure 5, and from the adjusted target response 66 to obtain a compensated modelled response 68 as described with reference to figure 2d at step 625, corresponding to step 525 of figure 5. The compensated modelled response 67 and compensated modelled response 68 (or as the case may be respective optional modelled implementation 68a and equivalent polynomial representation 69b) are compared at step 630 corresponding to step 530 of figure 5 to obtain an error function. As discussed above, the method may then optionally adjust parameters and loop back to step 602, where an improved modelled filter response 64 is generated for a new iteration of the process optimize.

By way of example, the foregoing method has been applied to obtain an 11th order coaxial stepped impedance lowpass Chebyshev I filter with its transition frequency at 1000 MHz with the *Simulia CST Studio Suite 2024* workflow.

A modelled implementation corresponding to element 69a as discussed above as a physical structure of conductive elements approximating the desired electrical structure was defined on the basis of the obtained values.

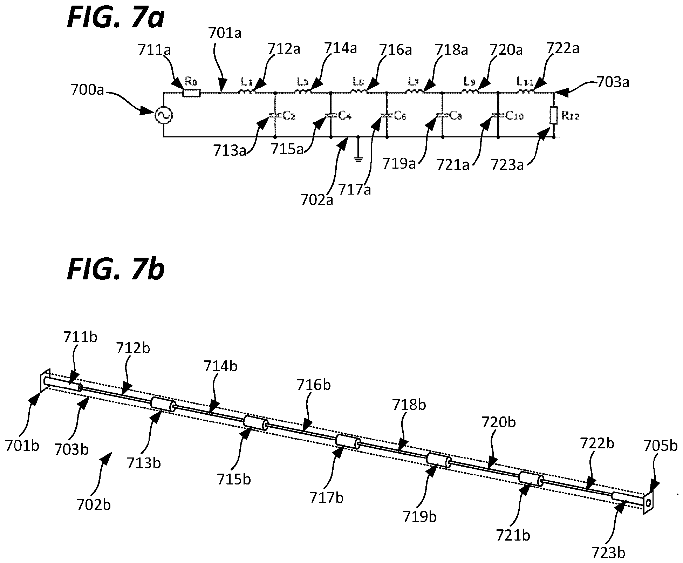

Figure 7a presents a circuit model used as the basis for a worked example.

As shown, the figure 7a shows a ladder network filter topology comprising a signal source 700a coupled between a ground terminal and the first terminal of a source resistor R0 711a. The second terminal of the source resistor R0 711a is the filter input terminal 701a. The filter input terminal 301 is coupled to a first terminal of an Inductor L1 712a. The second terminal of Inductor L1 712a is coupled to ground via a capacitor C2 713a, and to the first terminal of an inductor L3 714a. The second terminal of Inductor L3 is coupled to ground via a capacitor C4 715a, and to the first terminal of an inductor L5 716a. The second terminal of Inductor L5 is coupled to ground via a capacitor C6 717a, and to the first terminal of an inductor L7 718a. The second terminal of Inductor L7 is coupled to ground via a capacitor C8 719a, and to the first terminal of an inductor L9 720a. The second terminal of Inductor L9 is coupled to ground via a capacitor C10 721a, and to the first terminal of an inductor L11 722a. The second terminal of Inductor L11 is the filter output terminal 703a. The filter output terminal 703a is coupled to ground via load resistor 723a.

Figure 7b presents an equivalent 3D Model for the circuit of figure 7a.

The equivalent 3D model comprises a lumen 703b, which is modelled as having a perfectly conductive wall embedded in a perfectly conductive substrate 702a, corresponding to the ground connection 702a of figure 1.

Within the lumen 703b are disposed in sequence certain conductive cylindrical structures 711b, 712b, 713b, 714b, 715b, 716b, 717b, 718b, 719b, 720b, 721b, 722b, 723b, each in electrical connection with its neighbours. Structures 712b, 714b, 716b, 718b and 720b are long narrow structures, which at high frequencies will exhibit series inductive characteristics. Structures 713b, 715b, 717b, 719b and 721b are shorter structures with a greater diameter, such that their outer surface is in close proximity to the inner surface of lumen 703b so as to provide a shunt capacitive behaviour. Structures 711b and 723b are cylinders of moderate length and diameter, which forms a port with an impedance. As such, structures 711b, 712b, 713b, 714b, 715b, 716b, 717b, 718b, 719b, 720b, 721b, 722b, 723b map in function to components 711a, 712a, 713a, 714a, 715a, 716a, 717a, 718a, 719a, 720a, 721a, 722a, 723a as described above respectively.

By this means, in line with the methods described above, modelled values may be obtained for each of structures 711b, 712b, 713b, 714b, 715b, 716b, 717b, 718b, 719b, 720b, 721b, 722b, 723b for element 69a as discussed above, and synthesized values for components 711a, 712a, 713a, 714a, 715a, 716a, 717a, 718a, 719a, 720a, 721a, 722a for element 69b, for example as set out in the following table:

|  | Target |
|---|---|
| $R_0$ | 50.0 $\Omega$ |
| $L_1$ | 8.222 nH |
| $C_2$ | 4.6923 pF |
| $L_3$ | 15.954 nH |
| $C_4$ | 5.407 pF |
| $L_5$ | 16.744 nH |
| $C_6$ | 5.4999 pF |
| $L_7$ | 16.744 nH |
| $C_8$ | 5.407 pF |
| $L_9$ | 15.954 nH |
| $C_{10}$ | 4.6923 pF |
| $L_{11}$ | 8.222 nH |
| $R_{12}$ | 50.0 $\Omega$ |

Accordingly, a filter design method isolates parasitic zeros in a modelled response by comparison with a representation of a target response, and computes an adjusted representation of the target response corresponding to an implementation of the adjusted target polynomial representation according to a desired filter type (chebychev, butterworth, etc.) and incorporating the parasitic zeros thus isolated. The Parasitic zeros are then removed from this adjusted target polynomial representation, and also from the polynomial representation of the modelled response, and the two resulting representations used as the basis of an error function. This error function may then drive an iterative convergence minimising the error function, for example based on a stepwise convergence of parameters such as dimension values in a three dimensional model implementing each representation.

The inventive method can be performed by a suitably-programmed general-purpose computer or computer system, possibly including a computer network, storing a suitable program in non-volatile form on a computer-readable medium such as a hard disk, a solid state disk or a CD-ROM and executing the program using its microprocessor(s) and memory.

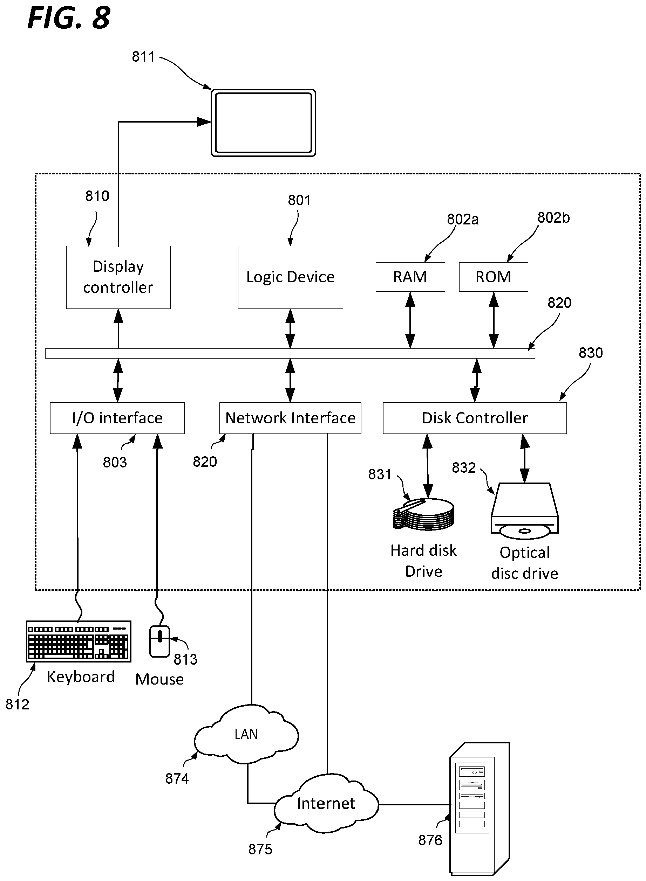

Figure 8 presents a computer suitable for carrying out a method according to an embodiment.

In figure 8, the computer includes a Central Processing Unit (CPU) 701 which may perform the method steps described above while running an executable program, i.e. a set of computer-readable instructions, stored in a memory device such as RAM 702a or ROM 702b or hard disk drive 731, DVD/CD drive 732, or stored remotely. Moreover, one or more computer files defining the spatial relations graphs, and computer files comprising the virtual space and objects defined therein, may also be stored on one or more of memory devices 702a, 702b, 731, 732, or remotely.

The claimed invention is not limited by the form of the computer-readable media on which the computer-readable instructions of the inventive process are stored. For example, the instructions and files can be stored on CDs, DVDs, in FLASH memory, RAM, ROM, PROM, EPROM, EEPROM, hard disk or any other information processing device with which the computer communicates, such as a server or computer. The program can be stored on a same memory device or on different memory devices.

Further, a computer program suitable for carrying out the inventive method can be provided as a utility application, background daemon, or component of an operating system, or combination thereof, executing in conjunction with CPU 701 and an operating system such as Microsoft XP, Microsoft Windows 10, UNIX, Solaris, LINUX, Apple MAC-OS and other systems known to those skilled in the art.

CPU 701 can be a Xenon processor from Intel of America or a Ryzen processor from AMD of America, or can be other processor types, such as a Freescale ColdFire, IMX, or ARM processor from NXP Semiconductors. Alternatively, the CPU can be a processor such as a Core from Intel Corporation of America, or can be implemented on an FPGA, ASIC, PLD or using discrete logic circuits, as one of ordinary skill in the art would recognize. Further, the CPU can be implemented as multiple processors cooperatively working to perform the computer-readable instructions of the inventive processes described above.

The computer may include a network interface 720, such as an Intel Ethernet PRO network interface card from Intel Corporation of America, for interfacing with a network, such as a local area network (LAN) 774, wide area network (WAN), the Internet 775 and the like. The method may be implemented remotely, by means of a web application, e.g. operating on remote server 776.

The computer further includes a display controller 710, such as a NVIDIA GeForce RTX graphics adaptor from NVIDIA Corporation of America for interfacing with display 711, such as a LCD monitor. A general purpose I/O interface 703 interfaces with a keyboard 712 and pointing device 713, such as a roller ball, mouse, touchpad and the like. The display, the keyboard, the sensitive surface for the touch mode and the pointing device, together with the display controller and the I/O interfaces, form a graphical user interface, used by the user to provide input commands.

Disk controller 730 connects HDD 731 and DVD/CD 732 with communication bus 720, which can be an ISA, EISA, VESA, PCI, or similar, for interconnecting all of the components of the computer.

A description of the general features and functionality of the display, keyboard, pointing device, as well as the display controller, disk controller, network interface and I/O interface is omitted herein for brevity as these features are known.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The examples described above are given as non-limitative illustrations of embodiments of the invention. They do not in any way limit the scope of the invention which is defined by the following claims.

**Claims**

1. A computer implemented method of obtaining an error function for an electrical filter design meeting an initial specification, said specification including:

frequency response characteristics and a desired filter type polynomial representation of a target filter response meeting an initial specification, said target filter response comprising a reflection polynomial (F(s)) and a transmission polynomial (P(s)),
a frequency response of a preliminary implementation model for optimization to meet said target filter response,

said method comprising the steps of:

extracting a refined polynomial representation from said frequency response of said preliminary implementation model, said reflection polynomial (F(s)) and/or said transmission polynomial (P(s)) of said refined polynomial representation having a higher order than the respective order of a reflection polynomial (F(s)) and a transmission polynomial (P(s)) of said polynomial representation of a target filter response,
comparing said polynomial representation of a target filter response with said refined polynomial representation to isolate polynomial parasitic zeros in said refined polynomial representation,

computing an adjusted polynomial representation of a target filter response corresponding to an implementation of said adjusted polynomial representation according to said desired filter type and incorporating said polynomial parasitic zeros,

removing said parasitic zeros from said adjusted polynomial representation of a target response to obtain a compensated polynomial representation of said target response,

removing said parasitic zeros from said refined polynomial representation of a modelled response to obtain a compensated polynomial representation of said modelled response,

determine an error function between said compensated polynomial representation of said target response and said compensated polynomial representation of said modelled response.

2. The method of claim 1 comprising the further step of optimizing said modelled implementation to minimize said error function between said compensated polynomial representation of said target response and said compensated polynomial representation of said modelled response.

3. The method of claim 2 wherein said step of optimizing comprises iteratively adjusting said preliminary implementation model to minimize said error between said compensated polynomial representation of said target response and said compensated polynomial representation of said modelled response.

4. The method of claim 2 wherein said step of optimizing comprises the further steps of

synthesizing compensated target parameters of a modelled implementation according to a specified model structure of said compensated polynomial representation of said target response,

synthesizing compensated modelled parameters of a modelled implementation according to a specified model structure of said compensated polynomial representation of said modelled response,

the error function being determined by comparing said compensated target parameters and said compensated modelled parameters,

iteratively adjusting said compensated target parameters of said modelled implementation to minimize said error function between said compensated target parameters and said compensated modelled parameters.

5. The method of any preceding claim wherein said step of extracting a polynomial representation of said modelled filter is performed by means of a polynomial fitting algorithm.

6. The method of any preceding claim wherein said desired filter type specifies any one of a Butterworth, Bessel, Chebyshev I, Chebyshev II or Elliptic filter type.

7. The method of any preceding claim wherein said desired filter type comprises a custom filter type.

8. The method of any preceding claim wherein said frequency response characteristics define one of a lowpass filter, a highpass filter, a bandpass filter, a bandstop filter, a diplexer or a multiplexer, an antennas or a filtenna, and corresponding frequency thresholds and gain characteristics.

9. The method of any preceding claim wherein said frequency response characteristics are defined in terms of at least a set of input reflection and/or transmission.

10. The method of any preceding claim wherein said modelled implementation according to a specified model structure of said compensated modelled response, and said modelled implementation of said compensated modelled response comprise a three dimensional model of the physical disposition of a plurality of conductive elements, wherein said parameters define said physical disposition.

11. The method of claim 4 wherein said step of defining parameters of a modelled implementation according to a specified model structure of said compensated target response, and said step of defining parameters of a modelled implementation according to a specified model structure of said compensated modelled response comprise developing a Coupling Matrix representation of said parameters.

12. The method of claim 4 wherein said step of defining parameters of a modelled implementation according to a specified model structure of said compensated target response, and said step of defining parameters of a modelled implementation according to a specified model structure of said compensated modelled response comprise developing a Lumped Element Circuit representation of said parameters.

13. The method of claim 12 wherein said Lumped Element Circuit comprises a ladder circuit representation of said parameters.

14. A computer program comprising instructions which, when the program is executed by a computer, cause the computer to carry out the method of any preceding claim.

15. A computer-readable medium comprising instructions which, when the program is executed by a computer, cause the computer to carry out the method of any of claims 1 to 13.

16. A data processing system comprising means for carrying out the method of any of claims 1 to 13.

**FIG. 1**

**FIG. 2a**

## FIG. 2b

## FIG. 2c

# FIG. 2d

*Attenuation/dB*

$f_3$    $f_5$  $f_7$    $p_2$

# FIG. 2e

*Attenuation/dB*

**FIG. 3**

**FIG. 4a**

Attenuation/dB

**FIG. 4b**

## FIG. 5

500 → ( Start )

505 → extract refined polynomial representation of preliminary implementation

510 → compare polynomial representation of target filter response with refined polynomial representation to isolate polynomial parasitic zeros

515 → computing adjusted polynomial representation of target filter response incorporating polynomial parasitic zeros

520 → remove parasitic zeros from adjusted polynomial representation of target response to obtain compensated polynomial representation of target response,

525 → remove parasitic zeros from adjusted polynomial representation of modelled response to obtain compensated polynomial representation of Modelled response,

530 → Determine error function

535 → Error function threshold met?

→ Adjust parameters 540

545 → ( End )

## FIG. 6

initial specification

61

Frequency Characteristics (fig 2a)

62

Desired Filter type

600

601 generating

initial target filter response (fig 2a)    63

602 generating

64

modeled filter response (fig 2b)

605 Extracting (s505)

Refined polynomial representation of said
modeled filter response at higher order

610

Compare to isolate parasitic zeros (s510)

615

65

Compute (s515)

66

adjusted target response incorporating
parasitic zeros and corresponding to
desired filter type (fig 2c)

625

620 Remove parasitic zeros (s520)    Remove parasitic zeros (s525)

67

compensated modeled response
compensated to omit said parasitic
zeros (fig 2e)

compensated target response
ccompensated to omit said parasitic
zeros (fig 2d)

68

69a

modeled implementation according
to a specified model structure of said
compensated modeled response

Equivalent polynomial representation
according to a specified model structure
of said compensated target response

69b

630

Determine error function (s530)

640

Adjust parameters to converge (s540)

## FIG. 7a

## FIG. 7b

# FIG. 8

Europäisches Patentamt
European Patent Office
Office européen des brevets

# EUROPEAN SEARCH REPORT

Application Number

**EP 23 30 5794**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/106072 A1 (TURNER PATRICK J [US] ET AL) 16 April 2015 (2015-04-16)<br>* abstract *<br>* [0004], [0009]<br>[0012]-[0017]<br>[0044]-[0047]<br>[0049]-[0054]<br>[0065], [0072] *<br>* figure 1 *<br>* the whole document *<br>----- | 1-16 | INV.<br>G06F30/20<br>G06F30/30<br>H03H9/46<br>G06F30/33<br>G06F30/367 |

TECHNICAL FIELDS SEARCHED (IPC)

G06F
H03H

The present search report has been drawn up for all claims

| Place of search | Date of completion of the search | Examiner |
|---|---|---|
| Munich | 24 October 2023 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 5794

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2023

| Patent document cited in search report | | Publication date | Patent family member(s) | | Publication date |
|---|---|---|---|---|---|
| US 2015106072 | A1 | 16-04-2015 | CN | 104412509 A | 11-03-2015 |
| | | | CN | 107666299 A | 06-02-2018 |
| | | | DE | 112014000125 T5 | 26-02-2015 |
| | | | GB | 2518780 A | 01-04-2015 |
| | | | JP | 6158942 B2 | 05-07-2017 |
| | | | JP | 6603268 B2 | 06-11-2019 |
| | | | JP | 2016508303 A | 17-03-2016 |
| | | | JP | 2017208822 A | 24-11-2017 |
| | | | KR | 20150032849 A | 30-03-2015 |
| | | | US | 2014266511 A1 | 18-09-2014 |
| | | | US | 2015106072 A1 | 16-04-2015 |
| | | | WO | 2014145113 A2 | 18-09-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. ESMAEILI ; A. BORJI.** Diagnosis and tuning of multiple coupled resonator filters. *2010 18th Iranian Conference on Electrical Engineering, Isfahan,* May 2010, vol. 2010, 124-129